# EUROPEAN PATENT APPLICATION

(11) **EP 3 048 134 A1**
(43) Date of publication of application: **27.07.2016**
(21) Application number: 16152064.8
(22) Date of filing: 20.01.2016
(51) Int. Cl.: C08K 5/00, C08K 5/09, C08K 5/13, C08K 5/134

(54) **METHOD FOR THE PREPARATION OF RUBBER COMPOUNDS FOR POLYMER PRODUCTS COMPRISING A NATURAL COMPOSITION WITH AN ANTIOXIDANT ACTIVITY**

(30) Priority: 23.01.2015 IT RM20150034
(71) Applicant: Bridgestone Corporation, Tokyo 104-8340 (JP)
(72) Inventor: Di Ronza, Raffaele, 00128 Rom (IT); Caliano, Ludovica, 00128 Rom (IT)
(74) Representative: Marchetti, Alessio

(57) **Abstract**

A method for preparing a rubber compound comprising a grinding step to grind food waste comprising chemicals with an antioxidant activity, whose structure comprises hydroxyl groups and conjugated double bonds, and a mixing step, during which a powder obtained from said grinding step is mixed with a polymer base with a cross-linkable unsaturated chain of the compound, and a further and subsequent mixing step wherein the compound being prepared is mixed with a vulcanization system.

## Description

The present invention relates to a method for preparing a rubber compound for polymer products comprising a natural composition with an antioxidant action.

In particular, the invention can be advantageously applied in the tyre sector, to which the description will explicitly refer without loss of generality.

As is known, the rubber compounds produced to prepare the various parts of the tyre entail the use of antioxidant agents useful for preventing degradation of the rubber due to the reaction of the polymer base with the oxygen and/or with the ozone.

Antioxidant agents are materials added to compounds subject to oxidation, like polymers, in order to inhibit or slow down the oxidative processes (as they themselves are oxidised). In other words, antioxidant agents are materials able to react with the atmospheric agents, thus preventing them reacting with the polymer base.

The concentration of the anti-ageing agents in the compound depends on the level of exposure to the atmosphere and on the temperature conditions and mechanical stress to which the specific tyre portion to which the compound refers is subject.

The most commonly used antioxidant agents belong to the family of the paraphenylenediamines (PPD), for example N-1,3-dimethylbutyl-N'-phenyl-paraphenylenediamine (6PPD), N,N'-diphenyl-p-phenylenediamine (DPPD), or they can be phenol derivatives such as 2,6-Di-tert-butyl-4-methylphenol (BHT), or belong to the family of the quinolines, for example poly(1,2-dihydro-2,2,4-trimethylquinoline) (TMQ).

The inventors of the present invention during their research have found that it is possible to use in the rubber compounds a selected type of appropriately treated food waste, obtaining an antioxidant effect equal to or better than the one obtained with the use of the traditional antioxidants. In particular, the inventors have surprisingly found that it is possible to use food waste as it is (also if subject to a crushing phase and, preferably, a drying phase), and therefore without being obliged to perform extraction of the antioxidant substances from the food waste, with the obvious resulting advantages in production terms.

This provides the important advantage of using in an extremely productive manner a potentially polluting waste product, at the same time saving on the disposal costs thereof.

The subject of the present invention is a method for the preparation of a rubber compound; said method being characterised in that it comprises a grinding step of food waste comprising compounds with antioxidant activity, the structure of which comprises hydroxyl groups and conjugated double bonds, a mixing step in which a powder obtained from said grinding step is mixed with a polymer base with a cross-linkable unsaturated chain, and a further and subsequent mixing step in which the compound being prepared is mixed with a vulcanization system; said food waste being comprised in the group consisting of coffee powder waste, olive oil production waste, wine production waste, essential oil production waste and mixtures thereof.

Here and below, by the term "polymer base with cross-linkable unsaturated chain" we mean any natural or synthetic non crosslinked polymer able to assume all the chemical-physical and mechanical characteristics typically assumed by elastomers following cross-linking (vulcanization) with sulphur-based systems.

Here and below, by vulcanization system we mean a complex of ingredients comprising at least sulphur and accelerating compounds, which in the preparation of the compound are added in a final mixing step, and have the object of promoting the vulcanization of the polymer base once the compound is subject to a vulcanization temperature.

Preferably, said grinding step is preceded by a drying step.

In particular, the coffee waste comprises chlorogenic acid, cinnamic acid and melanoidin as substances with antioxidant activity; olive oil production waste comprises oleocanthal as substance with antioxidant activity; wine production waste comprises tannins and resveratrol as substances with antioxidant activity; essential oil production waste comprises carnosic acid and carnosol as substances with antioxidant activity.

Preferably, in said mixing step, said powder is used in a quantity ranging from 2 to 6 phr.

A further subject of the present invention is a rubber compound comprising a powder obtained from a grinding step of food waste comprising compounds with antioxidant activity, the structure of which comprises hydroxyl groups and conjugated double bonds.

Preferably, said compound is used for preparing a tyre portion.

A further subject of the present invention is a tyre portion produced with a compound as defined above.

A further subject of the invention is a tyre comprising a portion as defined above.

A further subject of the present invention is the use in rubber compounds of ground food waste as antioxidant agents; said food waste being comprised in the group consisting of coffee powder waste, olive oil production waste, wine production waste, essential oil production waste and mixtures thereof.

For a better understanding of the invention, embodiments are described below for purely illustrative non-limiting purposes.

### EXAMPLES

3 compounds were prepared, the first of which (Compound A) constitutes a comparison example, representing a compound in which the antioxidant agent is of the type commonly used (BHT); the second (Compound B) is the same as Compound A with the difference that it does not comprise the antioxidant agent; the third (Compound C) constitutes a compound of the invention and is the same as Compound A with the difference that it replaces the antioxidant agent BHT with a powder obtained from the drying and grinding of specific food waste. In particular, for the Compound C powders deriving from the drying of spent coffee were used.
The three compounds were produced with the same procedure as described below but not relevant for the purposes of the present invention.

### - preparation of the compounds -

### (1st mixing step)

The polymer base, the antioxidant agent or the powder obtained from food waste and the carbon black were loaded, before the beginning of the mixing, in a mixer with tangential rotors and internal volume of 230-270 litres, reaching a filling factor of 66-72%.

The mixer was operated at a speed of 40-60 r.p.m., and the mixture that formed was discharged once a temperature of 145-165°C had been reached.

### (2nd mixing step)

The mixture obtained from the preceding step was mixed again in the mixer, operated at a speed of 40-60 r.p.m., and subsequently discharged once a temperature of 130-150°C had been reached.

### (3rd mixing stage)

Stearic acid and the vulcanization system consisting of sulphur, accelerants and zinc oxide were added to the mixture obtained from the preceding stage, reaching a filling factor of 63-67%.

The mixer was operated at a speed of 20-40 r.p.m., and the mixture formed was discharged once a temperature of 80-110°C had been reached.
Table I shows the compositions in phr of the Compounds A - C.

**TABLE I**

| | A | B | C |
|---|---|---|---|
| NR | 50.0 | | |
| BR | 50.0 | | |
| Carbon black | 50.0 | | |
| Antioxidant | 4.0 | -- | -- |
| Food waste powder | -- | -- | 4.0 |
| Zn oxide | 3.0 | | |
| Stearic acid | 2.0 | | |
| Sulphur | 1.0 | | |
| Accelerant | 1.0 | | |

| | | | |
|---|---|---|---|
| NR is a 1,4-cis polyisoprene rubber of natural origin. BR is a polybutadiene rubber with a 1,4 cis content of at least 40%. | | | |

The carbon black is classified by the code N550.

The antioxidant is 2,6-Di-tert-butyl-4-methylphenol (BHT).

The vulcanization accelerant is benzothiazyl-cyclohexyl-sulfenamide (CBS).

The compounds reported in Table I underwent tests to evaluate their mechanical, rheometric and dynamomechanical properties. In particular, the mechanical properties were measured both before and after the respective samples underwent an ageing process which entailed maintaining the samples in a stove at 100°C according to the ISO 188 standard.

The rheometric properties were measured according to the ASTM D6204 standard; the mechanical properties were measured according to the ASTM D412C standard.

Table II shows the results relative to the above properties. In order to highlight more immediately the advantages of the compound of the present invention, the values obtained from the tests were reported in Table II indexed to the results obtained from the comparison Compound A before the same underwent the ageing process.

**TABLE II**

| | A | B | C |
|---|---|---|---|
| Before the ageing process | | | |
| T50 | 100 | 95 | 100 |
| ML | 100 | 95 | 100 |
| MH | 100 | 100 | 100 |
| M300 | 100 | 100 | 100 |
| TB | 100 | 100 | 100 |
| EB | 100 | 100 | 100 |

| After the ageing process | | | |
|---|---|---|---|
| M300 | 150 | 180 | 150 |
| TB | 88 | 80 | 88 |
| EB | 70 | 50 | 70 |

As can be seen from the values reported in Table II, the use in the compound of the powder deriving from food waste according to the present invention is able to guarantee over time maintenance of the mechanical properties of the compound comparable to those obtained with the use of the antioxidant agents of the known art.

In short, the present invention is able to guarantee a productive use of food waste which would otherwise be sent to the landfill, with obvious problems of pollution, or undergo specific recycling operations, with the obvious problems of cost involved.

Furthermore, the present invention is extremely advantageous in production terms as it entails the use of food waste as it is, undergoing only a grinding step and, preferably, a previous drying step.

## Claims

1. A method for preparing a rubber compound; said method being **characterised in that** it comprises a grinding step to grind food waste comprising chemicals with an antioxidant activity, whose structure comprises hydroxyl groups and conjugated double bonds, and a mixing step, during which a powder obtained from said grinding step is mixed with a polymer base with a cross-linkable unsaturated chain, and a further and subsequent mixing step wherein the compound being prepared is mixed with a vulcanization system; said food waste being comprised in the group consisting of coffee powder waste, olive oil production waste, wine production waste, essential oil production waste and mixtures thereof.

2. Method according to claim 1, **characterised in that** said grinding step is preceded by a drying step.

3. Method according to claim 1 or 2, **characterized in that** during said mixing step, said powder is used in a quantity ranging from 2 to 6 phr.

4. A rubber compound comprising a powder obtained from a grinding step to grind food waste comprising chemicals with an antioxidant activity and obtained from the method according to one of the preceding claims.

5. A rubber compound according to claim 4, **characterized in that** it is used to manufacture a tyre portion.

6. A tyre portion manufactured with a compound according to claim 5.

7. A tyre comprising a portion according to claim 6.

8. Use as an antioxidant agent in rubber compounds of a powder obtained from a mixing step to mix food waste; said food waste being comprised in the group consisting of coffee powder waste, olive oil production waste, wine production waste, essential oil production waste and mixtures thereof.

9. Use according to claim 8, **characterised in that** said powder is present in the compound in a quantity ranging from 2 to 6 phr.
